# EUROPÄISCHE PATENTSCHRIFT

(11) **EP 3 670 115 B1**
(45) Veröffentlichungstag und Bekanntmachung des Hinweises auf die Patenterteilung: **20.10.2021**
(21) Anmeldenummer: 18214509.4
(22) Anmeldetag: 20.12.2018
(51) Int. Cl.: F16H 19/00, B25J 15/02

(54) **ÜBERTRAGUNGSMODUL, GREIFER-MODUL MIT ÜBERTRAGUNGSMODUL UND GREIFER-VORRICHTUNG MIT GREIFER-MODUL**
TRANSMISSION MODULE, GRIPPER MODULE WITH TRANSMISSION MODULE AND GRIPPER DEVICE WITH GRIPPER MODULE
MODULE DE TRANSMISSION, MODULE DE PRÉHENSION POURVU DE MODULE DE TRANSMISSION ET DISPOSITIF PRÉHENSION POURVU DE MODULE DE PRÉHENSION

(43) Veröffentlichungstag der Anmeldung: 24.06.2020
(73) Patentinhaber: TECAN TRADING AG, 8708 Männedorf (CH)
(72) Erfinder: LATZER, Christoph, 8627 Grüningen (CH); LEEMANN, Joas, 8344 Baretswil (CH)
(74) Vertreter: Troesch Scheidegger Werner AG

(56) Entgegenhaltungen:
- DE-A1-102013 207 179
- DE-U1-202008 005 838
- US-A1- 2006 263 270
- US-B1- 6 264 419

## Beschreibung

### TECHNISCHES GEBIET

Die vorliegende Erfindung betrifft ein Übertragungsmodul, insbesondere ein Übertragungsmodul mit zwei parallelen Antriebswellen und zwei konzentrischen Abtriebswellen.

### STAND DER TECHNIK

Aus dem Stand der Technik sind Übertragungsmodule bekannt, bei welchen zwei parallele Antriebswellen in zwei konzentrische Abtriebswellen übergeführt werden. Solche Übertragungsmodule umfassen eine äussere Welle und eine in dieser angeordnete innere Welle. Die äussere Welle wird von einem ersten Antrieb angetrieben und die innere Welle wird durch einen zweiten Antrieb angetrieben. Wenn die beiden Wellen synchron miteinander drehen sollen, so müssen die beiden Antriebe synchron miteinander drehen. Wenn sich die beiden Wellen mit einer Relativbewegung zueinander drehen sollen, so müssen die beiden Antriebe mit einer Relativbewegung zueinander drehen. Siehe zum Beispiel Dokument US6264419. Dies ist steuerungstechnisch aufwändig und beide Antriebe müssen für einen Dauerbetrieb ausgelegt werden, obschon dies eigentlich nicht nötig wäre, da die Relativbewegung im Vergleich zur Synchronbewegung nur selten erforderlich ist.

### BESCHREIBUNG DER ERFINDUNG

Eine Aufgabe der vorliegenden Erfindung besteht darin, ein Übertragungsmodul bereitzustellen, bei welchem die zuvor genannten Nachteile vermieden werden.

Diese Aufgabe wird durch ein Übertragungsmodul mit den Merkmalen des Anspruchs 1 gelöst. Weitere Ausführungsformen des Übertragungsmoduls, eines Greifer-Moduls mit einem erfindungsgemässen Übertragungsmodul, sowie einer Greifer-Vorrichtung mit einem erfindungsgemässen Greifer-Modul sind durch die Merkmale von weiteren Ansprüchen definiert.

Ein erfindungsgemässes Übertragungsmodul zur Übertragung von Drehmomenten umfassend eine Basis, eine erste Antriebswelle, welche um eine erste Achse drehbar ist, eine dazu parallele zweite Antriebswelle, welche um eine zweite Achse drehbar ist. Weiter umfasst das Übertragungsmodul eine erste Abtriebswelle und eine zweite Abtriebswelle, welche beide um eine gemeinsame dritte Achse drehbar sind, wobei die Achsen der Antriebswellen parallel zur Achse der Abtriebswellen angeordnet sind. Weiter umfasst das Übertragungsmodul eine Getriebeeinheit, wobei die beiden Antriebswellen, die Getriebeeinheit und die erste Abtriebswelle drehbar in der Basis gelagert sind und wobei die zweite Abtriebswelle drehbar in der ersten Abtriebswelle gelagert ist. Die Getriebeeinheit ist derart ausgestaltet, dass durch eine Drehbewegung der ersten Antriebswelle eine synchrone Drehbewegung der beiden Abtriebswellen bewirkbar ist und dass durch eine Drehbewegung der zweiten Antriebswelle eine relative Drehbewegung der beiden Abtriebswellen bewirkbar ist. Damit kann erreicht werden, dass mit der ersten Antriebswelle die erste und zweite Abtriebswelle gemeinsam und synchron miteinander angetrieben werden und dass mit der zweiten Antriebswelle eine Relativbewegung zwischen der ersten Abtriebswelle und der zweiten Abtriebswelle erzeugt wird. Somit muss nur der Antrieb der ersten Antriebswelle für eine erhöhte Einsatzdauer ausgelegt werden und der Antrieb der zweiten Antriebswelle ist nur für die Einsatzdauer der Relativbewegung auszulegen. Mit einer solchen Ausgestaltung sind die beiden Antriebe vollständig unabhängig voneinander und müssen zu keinem Zeitpunkt miteinander synchronisiert werden. Diese Bauweise ist zudem sehr kompakt und über einen sehr grossen Abmessungsbereich skalierbar.

In einer Ausführungsform umfasst die Getriebeeinheit ein Planetengetriebe mit einem Sonnenrad, einem Planetenträger, mindestens einem Planetenrad und einem zweiten Hohlrad, wobei die erste Antriebswelle mit der ersten Abtriebswelle wirkverbunden ist und diese antreiben kann. Die erste Antriebswelle ist durch die Getriebeeinheit mit der zweiten Abtriebswelle wirkverbunden und kann diese antreiben. Die zweite Antriebswelle ist durch die Getriebeeinheit mit der zweiten Abtriebswelle wirkverbunden und kann diese antreiben. Das Planetengetriebe kann zwei, drei oder mehr Planetenräder umfassen.

In einer Ausführungsform umfasst die Getriebeeinheit eine zentrische Getriebewelle, welche um die dritte Achse drehbar ist. Das Sonnenrad ist fest mit einem ersten Ende der Getriebewelle verbunden. Der Planetenträger ist drehbar auf der Getriebewelle gelagert. Ein zweites Stirnrad ist benachbart zum Planetengetriebe fest mit der Getriebewelle verbunden.

In einer Ausführungsform ist ein erstes Stirnrad fest mit der ersten Antriebswelle verbunden und das erste Stirnrad ist über das Sonnenrad des Planetengetriebes mit der ersten Abtriebswelle wirkverbunden.

In einer Ausführungsform ist ein fünftes Stirnrad fest mit der zweiten Antriebwelle verbunden und das fünfte Stirnrad ist über den Planetenträger des Planetengetriebes mit der zweiten Abtriebswelle wirkverbunden.

In einer Ausführungsform umfasst die Getriebeeinheit ein sechstes Stirnrad, welches fest mit dem Planetenträger verbunden ist.

In einer Ausführungsform ist der Planetenträger durch das sechste Stirnrad drehbar auf der Getriebewelle gelagert.

In einer Ausführungsform umfasst die erste Abtriebswelle ein Gehäuse, welches die Getriebeeinheit vollständig umgibt und welches einen ersten Gehäuseteil und einen fest mit diesem verbundenen zweiten Gehäuseteil umfasst.

In einer Ausführungsform umfasst das Übertragungsmodul ein erstes Hohlrad, welches drehbar in der Basis gelagert ist und welches fest mit dem ersten Gehäuseteil verbunden ist.

In einer Ausführungsform ist das zweite Hohlrad des Planetengetriebes drehbar im ersten Gehäuseteil gelagert und ist fest mit der zweiten Abtriebswelle verbunden.

In einer Ausführungsform umfasst der zweite Gehäuseteil eine zentrische Durchgangsöffnung, welche mit der dritten Achse fluchtend ist und durch welche die zweite Abtriebswelle hindurchragt.

In einer Ausführungsform umfasst die Basis einen plattenförmigen ersten Basisteil und einen bügelförmigen zweiten Basisteil, welche fest miteinander verbunden sind.

In einer Ausführungsform ist das erste Hohlrad drehbar im ersten Basisteil gelagert. Die erste Antriebswelle, die zweite Antriebswelle und die zentrische Getriebewelle sind drehbar im zweiten Basisteil gelagert.

Die erwähnten Ausführungsformen des Übertragungsmoduls lassen sich in beliebiger Kombination einsetzen, sofern sie sich nicht widersprechen.

Ein erfindungsgemässes Greifer-Modul umfasst ein Übertragungsmodul gemäss einer der vorangehenden Ausführungsformen und eine Greifer-Einheit. Die Greifer-Einheit umfasst mindestens zwei Greifer, welche in einer zur dritten Achse senkrechten ersten Ebene verschiebbar in der ersten Abtriebswelle gelagert sind und welche durch die zweiten Abtriebswelle verschiebbar sind. Bei zwei Greifern können diese sich gegenüberliegend bezüglich der dritten Achse angeordnet sein. Drei Greifer können gleichmässig am über den Umfang verteilt um die dritte Achse angeordnet sein und gegen das Zentrum des Greifers, d.h. gegen die dritte Achse verfahrbar sein. Die Greifer können derart ausgestaltet sein, dass sie vollständig zusammengefahren werden können und sich zumindest teilweise berühren können oder sie können im zusammengefahrenen Zustand einen Abstand zueinander aufweisen, der kleiner ist als die zu greifenden Objekte.

In einer Ausführungsform sind die mindestens zwei Greifer im zweiten Gehäuseteil verschiebbar gelagert. Beispielsweise können die Greifer auf Führungsschienen gelagert sein.

In einer Ausführungsform ist jeder Greifer mit einer Zahnstange fest verbunden und die Zahnstange ist in der Ersten Ebene verschiebbar in der ersten Abtriebswelle gelagert. Die zweite Abtriebswelle umfasst ein Abtriebsrad, welches mit jeder Zahnstange wirkverbunden ist und mit welchem jede Zahnstange verschiebbar ist. Mit einer solchen Ausgestaltung können alle Greifer mit einem Antrieb synchron miteinander verschoben werden. Alternativ können Spindelantriebe, Riemenantriebe, Kettenantriebe oder dergleichen verwendet werden, um die relative Drehbewegung zwischen der ersten Abtriebswelle und der zweiten Abtriebswelle in eine lineare Bewegung der Greifer zu überführen.

In einer Ausführungsform umfasst das Greifer-Modul eine Abdeckung, durch welche zumindest die Greifer hindurchragen und welche zumindest die Zahnstangen abdeckt.

Die erwähnten Ausführungsformen des Greifer-Moduls lassen sich in beliebiger Kombination einsetzen, sofern sie sich nicht widersprechen.

Eine erfindungsgemässe Greifer-Vorrichtung umfasst mindestens ein Greifer-Modul gemäss einer der zuvor beschriebenen Ausführungsform, eine Struktur, eine Objektaufnahme und mindestens eine Verschiebe-Einheit. Die Objektaufnahme ist mit einer ersten Verschiebe-Einheit an der Struktur angeordnet. Alternativ oder zusätzlich ist das Greifer-Modul mit einer zweiten Verschiebe-Einheit an der Struktur angeordnet. Eine solche Ausführungsform ermöglicht es, dass die zu greifenden Objekte zum Greifer-Modul bewegbar sind und/oder das Greifer-Modul zum zu greifenden Objekt bewegbar ist. Eine Struktur kann beispielsweise ein Maschinenständer sein.

In einer Ausführungsform können die erste Verschiebe-Einheit und/oder die zweite Verschiebe-Einheit Verschiebungen einer ersten horizontalen Richtung und/oder in einer dazu senkrechten zweiten horizontalen Richtung und/oder in einer vertikalen Richtung ausführen.

In einer Ausführungsform umfasst die Greifer-Vorrichtung zwei oder mehr Greifer-Module, welche unmittelbar oder mittels einer Verschiebe-Einheit an der Struktur angeordnet sind.

Die erwähnten Ausführungsformen der Greifer-Vorrichtung lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine perspektivische Ansicht eines erfindungsgemässen Greifer-Moduls;
Fig. 2 eine perspektivische Explosionsansicht des Greifer-Moduls der Figur 1;
Fig. 3 eine schematische Schnittansicht des Greifer-Moduls der Figur 1 entlang der Line A-A;
Fig. 4a eine Schnittansicht des Greifer-Moduls der Figur 1 entlang der Line A-A;
Fig. 4b eine Schnittansicht durch die Linie B-B der Figur 4a;
Fig. 4c eine Schnittansicht durch die Linie C-C der Figur 4a;
Fig. 4d eine Schnittansicht durch die Linie D-D der Figur 4a;
Fig. 5 eine perspektivische Ansicht einer ersten Ausführungsform einer erfindungsgemässen Greifer-Vorrichtung; und
Fig. 6 eine perspektivische Ansicht einer zweiten Ausführungsform einer erfindungsgemässen Greifer-Vorrichtung.

### DETAILLIERTE BESCHREIBUNG DER ERFINDUNG

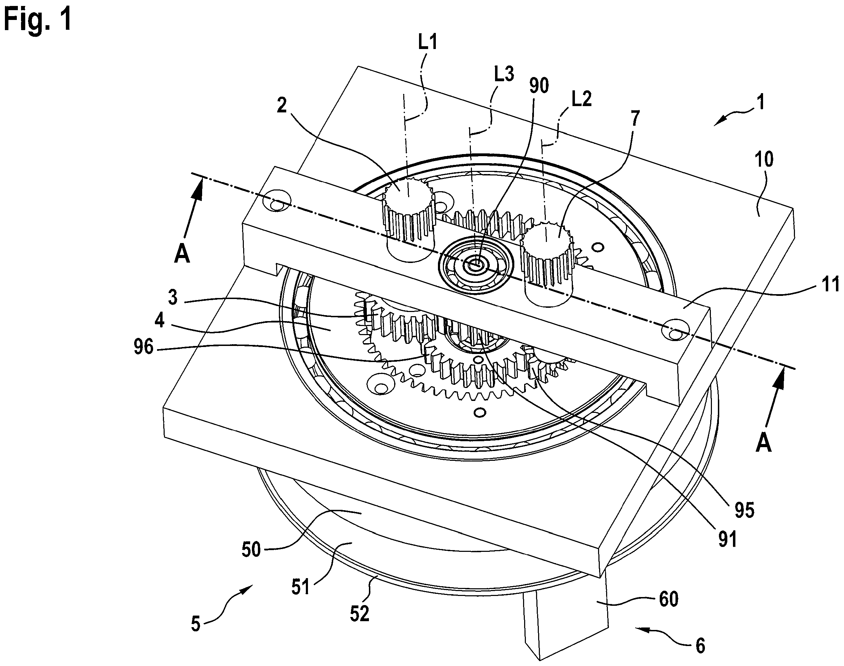

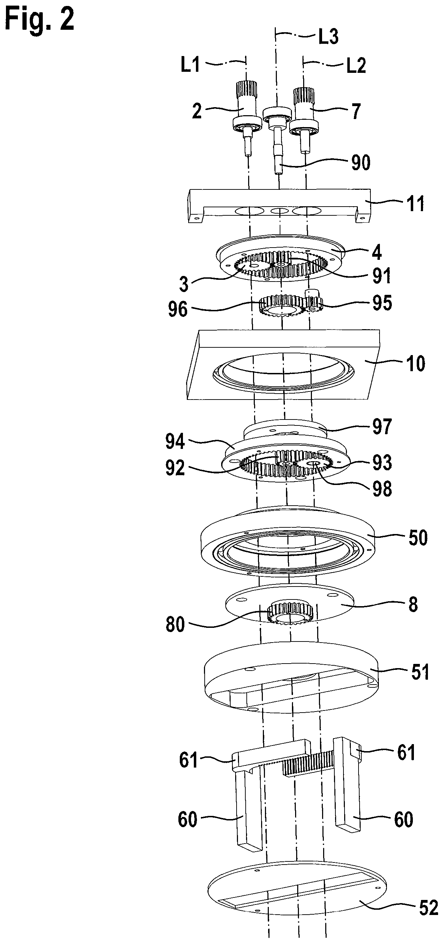

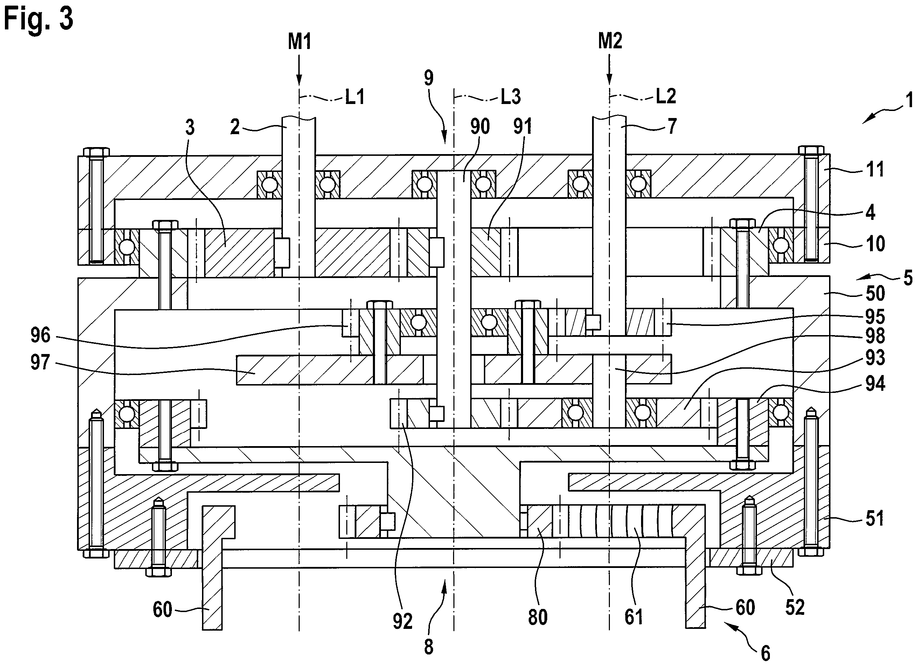

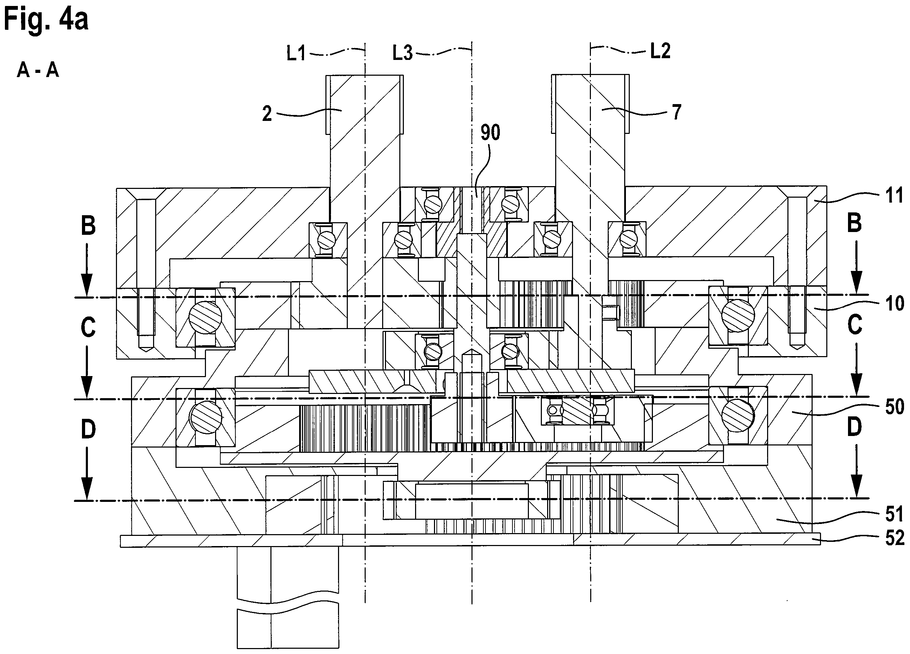

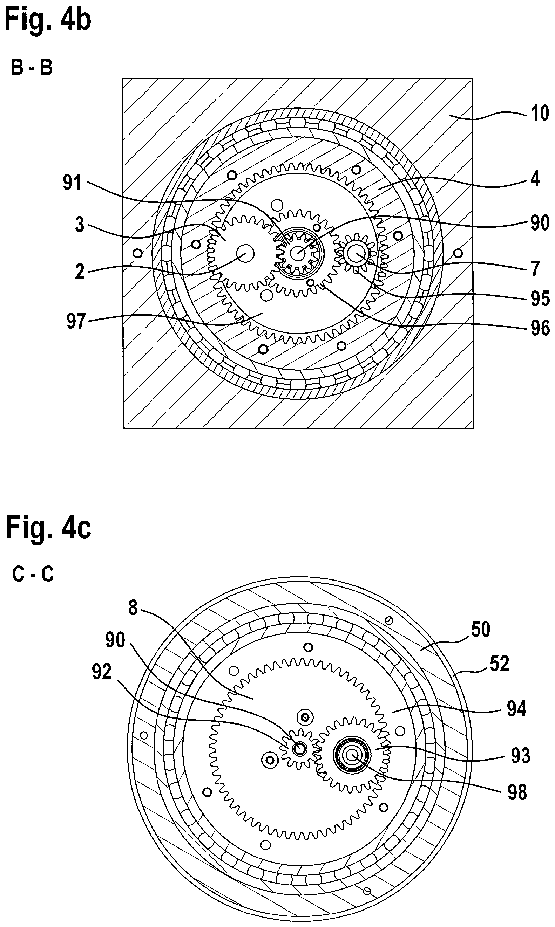

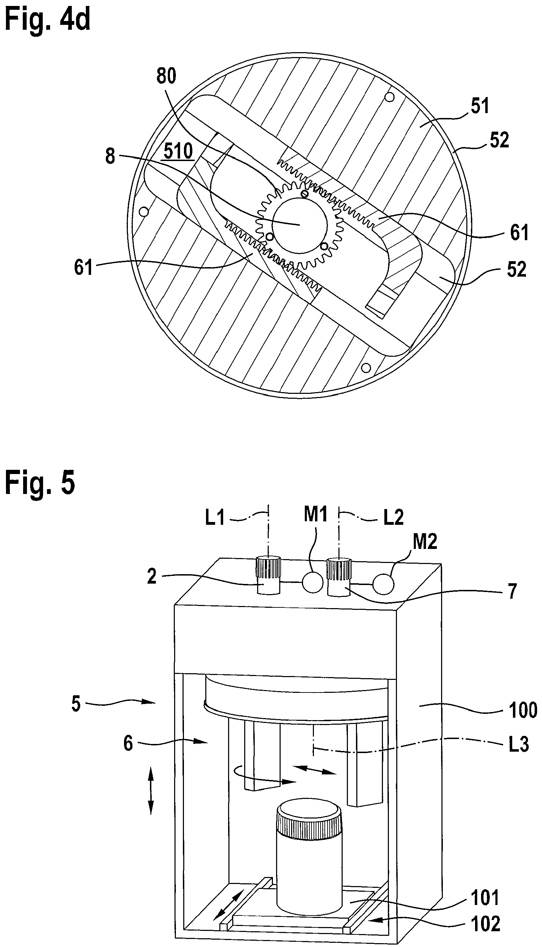

Die Figur 1 zeigt eine perspektivische Ansicht eines erfindungsgemässen Greifer-Moduls, die Figur 2 zeigt eine perspektivische Explosionsansicht des Greifer-Moduls der Figur 1, die Figur 3 zeigt eine schematische Schnittansicht des Greifer-Moduls der Figur 1 entlang der Line A-A, die Figur 4a zeigt eine Schnittansicht des Greifer-Moduls der Figur 1 entlang der Line A-A, die Figur 4b zeigt eine Schnittansicht durch die Linie B-B der Figur 4a, die Figur 4c zeigt eine Schnittansicht durch die Linie C-C der Figur 4a und die Figur 4d zeigt eine Schnittansicht durch die Linie D-D der Figur 4a.

Das Greifer-Modul umfasst ein Übertragungsmodul und eine Greifer-Einheit 6. Das Übertragungsmodul umfasst eine Basis 1 mit einem plattenförmigen ersten Basisteil 10 und einem bügelförmigen zweiten Basisteil 11, welche fest miteinander verbunden sind. Der Bügel 11 erstreckt sich von einer Seite der Platte 10 über das Zentrum zu einer dieser gegenüberliegenden Seite der Platte 10. Der Bügel 11 ist mit der Platte 10 fest verschraubt. Eine erste Antriebswelle 2, eine zweite Antriebswelle 7 und eine Getriebewelle 90 einer Getriebeeinheit 9 sind mittels Kugellager drehbar im Bügel 11 gelagert. Alternative Lager, wie beispielsweise Rollenlager, Nadellager oder Gleitlager können ebenfalls verwendet werden. Die erste Antriebswelle 2 ist um eine erste Achse L1 drehbar, die zweite Antriebswelle 7 ist um eine zweite Achse L2 drehbar und die Getriebewelle 90 ist um eine dritte Achse L3 drehbar. Ein erstes Hohlrad 4 ist mit einem Kugellager drehbar in der Platte 10 der Basis 1 gelagert. Ein erstes Stirnrad 3 ist fest mit dem antriebsfernen Ende der ersten Antriebswelle 2 verbunden. Das erste Stirnrad 3 greift auf der Innenseite in das erste Hohlrad 4 ein. Das erste Hohlrad 4 ist fest mit einem ersten Gehäuseteil 50 des Gehäuses 5 verbunden. Das Gehäuse 5 stellt die erste Abtriebswelle 5 dar, welche um die dritte Achse L3 drehbar ist. Das Gehäuse 5 umfasst den basisnahen ersten Gehäuseteil 50 und einen basisabgewandten zweiten Gehäuseteil 51, welcher fest mit dem ersten Gehäuseteil 50 verbunden ist. Die Getriebeeinheit 9 erstreckt sich von der Basis 1 bis in das Gehäuse 5, umfasst die zentrale Getriebewelle 90, ein zweites Stirnrad 91, ein Planetengetriebe 92,93,94,97,98 und ein sechstes Stirnrad 96. Das zweite Stirnrad 91 ist in einem basisnahen Bereich fest mit der Getriebewelle 90 verbunden und greift in das erste Stirnrad 3 ein. Das Planetengetriebe umfasst ein Sonnenrad 92, welches an einem basisfernen Ende fest mit der Getriebewelle 90 verbunden ist, einen Planetenträger 97, welcher benachbart zum Sonnenrad 92 drehbar auf der Getriebewelle 90 gelagert ist, mindestens eine Planetenwelle 98, auf welcher ein Planetenrad 93 drehbar gelagert ist, wobei das Planetenrad 93 in das Sonnenrad 92 eingreift, ein zweites Hohlrad 94, welches im ersten Gehäuseteil 50 drehbar gelagert ist und in welches das mindestens eine Planetenrad 93 auf der Innenseite eingreift. Das sechste Stirnrad 96 ist auf der basiszugewandten Seite des Planetengetriebes fest mit dem Planetenträger 97 verbunden. Das sechste Stirnrad ist drehbar auf der Getriebeachse 90 gelagert. Ein fünftes Stirnrad 95 ist an einem basisfernen Ende fest mit der zweiten Antriebswelle 7 verbunden und greift in das sechste Stirnrad 96 ein. Eine zweite Abtriebswelle 8 ist fest mit dem zweiten Hohlrad 94 des Planetengetriebes verbunden. Die zweite Abtriebswelle 8 ragt durch eine zentrische Öffnung durch den zweiten Gehäuseteil 51. Ein Abtriebsrad 80 ist an einem basisfernen Ende fest mit der zweiten Abtriebswelle 8 verbunden. Eine Greifer-Einheit 6 ist in einer Ausnehmung 510 des zweiten Gehäuseteils 51 angeordnet. Die Greifer-Einheit 6 umfasst mindestens zwei Greifer 60, von denen jeder an einer basiszugewandten Seite eine Zahnstange 61 umfasst. Die Greifer 60 erstrecken sich im Wesentlichen parallel zur ersten, zweiten oder dritten Achse L1,L2,L3 und die Zahnstangen 61 erstrecken sich im Wesentlichen senkrecht zu diesen Achsen. Die Zahnstangen 61 greifen in das Abtriebsrad 80 ein. Die Ausnehmung 510 im zweiten Gehäuseteil 51 ist zumindest teilweise durch eine Abdeckung 52 abgedeckt, wobei die Abdeckung 52 fest mit dem zweiten Gehäuseteil 51 verbunden ist. In der Abdeckung 52 ist mindestens eine Öffnung vorgesehen, durch welche die Greifer 60 hindurchragen. In der dargestellten Ausführungsform haben das erste Hohlrad 4 und das zweite Hohlrad 94 einen gleichen Teilkreisdurchmesser, haben das zweite Stirnrad 91, das Sonnenrad 92 und das fünfte Stirnrad 95 einen gleichen Teilkreisdurchmesser und haben das erste Stirnrad 3, das sechse Stirnrad 96 und das Planetenrad 93 einen gleichen Teilkreisdurchmesser. Durch diese Ausgestaltung entspricht das Übersetzungsverhältnis vom ersten Stirnrad 3 zum ersten Hohlrad 4, demjenigen vom ersten Stirnrad 3 über die Getriebeeinheit 9 zum zweiten Hohlrad 94. Wird die erste Antriebswelle 2 durch einen ersten Antrieb M1 angetrieben, so drehen sich das erste Hohlrad 4 und das zweite Hohlrad 94 synchron miteinander. Unabhängig von der Bewegung der ersten Antriebswelle 2, kann mit einem zweiten Antrieb M2 die zweite Antriebswelle 7 angetrieben werden. Dementsprechend kann eine Relativbewegung zwischen dem ersten Hohlrad 4 und dem zweien Hohlrad 94 erzeugt werden, unabhängig von der Bewegung des ersten Hohlrades 4. Ganz allgemein ist mit einem solchen Übertragungsmodul eine synchrone Bewegung der ersten Abtriebswelle 5 zusammen mit der zweiten Abtriebswelle 8 möglich, wenn lediglich die erste Antriebswelle 2 durch den ersten Antrieb M1 angetrieben wird und ist eine von der Bewegung der ersten Antriebswelle 2 unabhängige Relativbewegung zwischen der ersten Abtriebswelle 5 und der zweiten Abtriebswelle 8 möglich, wenn die zweite Antriebswelle 7 mit dem zweiten Antrieb M2 angetrieben wird.

Die Figur 5 zeigt eine perspektivische Ansicht einer ersten Ausführungsform einer erfindungsgemässen Greifer-Vorrichtung. Die Greifer-Einheit 6 ist mittels des Übertragungsmoduls an einer Struktur 100 angeordnet. Ein erster Antrieb M1 und ein zweiter Antrieb M2 sind an der Struktur 100 angeordnet. Durch den ersten Antrieb M1 ist die Greifer-Einheit 6 um die dritte Achse L3 drehbar und durch den zweiten Antrieb M2 sind die Greifer 60 der Greifer-Einheit 6 in jeder Ausrichtung zusammen- oder auffahrbar. Unterhalb des Übertragungsmoduls ist an der Struktur 100 eine Objektaufnahme 101 angeordnet, in welcher zu drehende Objekte angeordnet werden können, welche als ganzes gedreht werden sollen oder bei welchen Komponenten durch Drehen anzuordnen oder zu entfernen sind. Beispielsweise kann ein Deckel eines Behältnisses auf- oder zugeschraubt werden. Die Objektaufnahme 101 ist auf einer ersten Verschiebe-Einheit 102 angeordnet, mit welcher die Objektaufnahme 101 in einer ersten horizontalen Richtung verfahrbar ist. Alternativ oder zusätzlich können weitere horizontale und/oder vertikale Verschiebe-Einheiten vorgesehen sein.

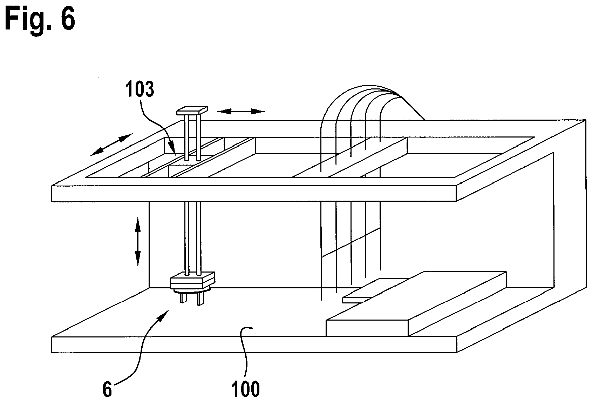

Die Figur 6 zeigt eine perspektivische Ansicht einer zweiten Ausführungsform einer erfindungsgemässen Greifer-Vorrichtung. An der Struktur 100 ist eine zweite Verschiebe-Einheit 103 angeordnet, an welcher eine Greifer-Einheit 6 mittels eines erfindungsgemässen Übertragungsmoduls angeordnet ist. Die zweite Versschiebe-Einheit 103 ist portalartig ausgestaltet und ermöglicht es, die Greifer-Einheit in eine erste horizontale Richtung, in eine zur ersten horizontalen Richtung senkrechten zweiten horizontalen Richtung und in senkrechte Richtung zu bewegen. In der dargestellten Ausführungsform ist die Struktur 100 ein Arbeitstisch mit einem darüber angeordneten Portal. Auf dem Arbeitstisch können weitere Stationen vorgesehen sein, in welche Behälter mittels der Greifer-Einheit 6 angeordnet werden können und/oder in welchen Behälter auf- oder zugeschraubt werden können.

**BEZUGSZEICHENLISTE**

| | | | |
|---|---|---|---|
| 1 | Basis | 91 | zweites Stirnrad |
| 10 | erster Basisteil | 92 | drittes Stirnrad |
| 11 | zweiter Basisteil | 93 | viertes Stirnrad |
| 2 | erste Antriebswelle | 94 | zweites Hohlrad |
| 3 | erstes Stirnrad | 95 | fünftes Stirnrad |
| 4 | erstes Hohlrad | 96 | sechstes Stirnrad |
| 5 | Gehäuse | 97 | Planetenträger |
| 50 | erster Gehäuseteil | 98 | Planetenwelle |
| 51 | zweiter Gehäuseteil | 100 | Struktur |
| 510 | Ausnehmung | 101 | Objektaufnahme |
| 52 | Abdeckung | 102 | ersten Verschiebe-Einheit |
| 6 | Greifer-Einheit | | |
| 60 | Greifer | 103 | zweite Verschiebe-Einheit |
| 61 | Zahnstange | | |
| 7 | zweite Antriebswelle | L1 | erste Achse |
| 8 | Abtriebswelle | L2 | zweite Achse |
| 80 | Abtriebsrad | L3 | dritte Achse |
| 9 | Getriebeeinheit | M1 | erster Antrieb |
| 90 | Getriebewelle | M2 | zweiter Antrieb |

## Patentansprüche

1. Ein Übertragungsmodul zur Übertragung von Drehmomenten umfassend
eine Basis (1),
eine erste Antriebswelle (2), welche um eine erste Achse (L1) drehbar ist, eine dazu parallele zweite Antriebswelle (7), welche um eine zweite Achse (L2) drehbar ist,
eine erste Abtriebswelle (5) und eine zweite Abtriebswelle (8), welche beide um eine gemeinsame dritte Achse (L3) drehbar sind, wobei die Achsen (L1;L2) der Antriebswellen (2;7) parallel zur Achse (L3) der Abtriebswellen (5;8) angeordnet sind,
eine Getriebeeinheit (9),
wobei die beiden Antriebswellen (2;7), die Getriebeeinheit (9) und die erste Abtriebswelle (5) drehbar in der Basis (1) gelagert sind,
wobei die zweite Abtriebswelle (8) drehbar in der ersten Abtriebswelle (5) gelagert ist,
**dadurch gekennzeichnet, dass** die Getriebeeinheit (9) derart ausgestaltet ist, dass durch eine Drehbewegung der ersten Antriebswelle (2) eine synchrone Drehbewegung der beiden Abtriebswellen (5;8) bewirkbar ist und dass durch eine Drehbewegung der zweiten Antriebswelle (7) eine relative Drehbewegung der beiden Abtriebswellen (5;8) bewirkbar ist.

2. Das Übertragungsmodul gemäss Anspruch 1, wobei die Getriebeeinheit (9) ein Planetengetriebe mit einem Sonnenrad (92), einem Planetenträger (97), mindestens einem Planetenrad (93) und einem zweiten Hohlrad (94) umfasst, wobei die erste Antriebswelle (2) mit der ersten Abtriebswelle (5) wirkverbunden ist und diese antreiben kann, wobei die erste Antriebswelle (2) durch die Getriebeeinheit (9) mit der zweiten Abtriebswelle (8) wirkverbunden ist und diese antreiben kann und wobei die zweite Antriebswelle (7) durch die Getriebeeinheit (9) mit der zweiten Abtriebswelle (8) wirkverbunden ist und diese antreiben kann.

3. Das Übertragungsmodul gemäss Anspruch 2, wobei die Getriebeeinheit (9) eine zentrische Getriebewelle (90) umfasst, welche um die dritte Achse (L3) drehbar ist, wobei das Sonnenrad (92) fest mit einem ersten Ende der Getriebewelle (90) verbunden ist, wobei der Planetenträger (97) auf der Getriebewelle (90) drehbar gelagert ist und wobei ein zweites Stirnrad (91) benachbart zum Planetengetriebe fest mit der Getriebewelle (90) verbunden ist.

4. Das Übertragungsmodul gemäss Anspruch 2 oder 3, wobei ein erstes Stirnrad (3) fest mit der ersten Antriebswelle (2) verbunden ist und wobei das erste Stirnrad (3) über das Sonnenrad (92) des Planetengetriebes mit der ersten Abtriebswelle (5) wirkverbunden ist.

5. Das Übertragungsmodul gemäss einem der Ansprüche 2 bis 4, wobei ein fünftes Stirnrad (95) fest mit der zweiten Antriebwelle (7) verbunden ist und wobei das fünfte Stirnrad (95) über den Planetenträger (97) des Planetengetriebes mit der zweiten Abtriebswelle (8) wirkverbunden ist.

6. Das Übertragungsmodul gemäss einem der Ansprüche 2 bis 5, wobei die Getriebeeinheit (9) ein sechstes Stirnrad (96) umfasst, welches fest mit dem Planetenträger (97) verbunden ist.

7. Das Übertragungsmodul gemäss einem der Ansprüche 3 bis 6, wobei der Planetenträger (97) durch das sechste Stirnrad (96) drehbar auf der Getriebewelle (90) gelagert ist.

8. Das Übertragungsmodul gemäss einem der vorangehenden Ansprüche, wobei die erste Abtriebswelle (5) ein Gehäuse umfasst, welches die Getriebeeinheit (9) vollständig umgibt und welches einen ersten Gehäuseteil (50) und einen fest mit diesem verbundenen zweiten Gehäuseteil (51) umfasst.

9. Das Übertragungsmodul gemäss Anspruch 8, umfassend ein erstes Hohlrad (4), welches drehbar in der Basis (1) gelagert ist und welches fest mit dem ersten Gehäuseteil (50) verbunden ist.

10. Das Übertragungsmodul gemäss Anspruch 8 oder 9, wobei das zweite Hohlrad (94) des Planetengetriebes drehbar im ersten Gehäuseteil (50) gelagert ist und fest mit der zweiten Abtriebswelle (8) verbunden ist.

11. Das Übertragungsmodul gemäss einem der Ansprüche 8 bis 10, wobei der zweite Gehäuseteil (51) eine zentrische Durchgangsöffnung umfasst, welche mit der dritten Achse (L3) fluchtend ist und durch welche die zweite Abtriebswelle (8) hindurchragt.

12. Das Übertragungsmodul gemäss einem der Ansprüche 3 bis 11, wobei das erste Hohlrad (4) drehbar im ersten Basisteil (10) gelagert ist und wobei die erste Antriebswelle (2), die zweite Antriebswelle (7) und die zentrische Getriebewelle (90) drehbar im zweiten Basisteil (11) gelagert sind.

13. Ein Greifer-Modul umfassend ein Übertragungsmodul gemäss einem der vorangehenden Ansprüche und eine Greifer-Einheit (6), wobei die Greifer-Einheit (6) mindestens zwei Greifer (60) umfasst, welche in einer zur dritten Achse (L3) senkrechten ersten Ebene verschiebbar in der ersten Abtriebswelle (5) gelagert sind und welche durch die zweiten Abtriebswelle (8) verschiebbar sind.

14. Das Greifer-Modul gemäss Anspruch 13, wobei die mindestens zwei Greifer (60) im zweiten Gehäuseteil (51) verschiebbar gelagert sind.

15. Das Greifer-Modul gemäss Anspruch 13 oder 14, wobei jeder Greifer (60) mit einer Zahnstange (61) fest verbunden ist und die Zahnstange (61) in der Ersten Ebene verschiebbar in der ersten Abtriebswelle (5) gelagert ist und wobei die zweite Abtriebswelle (8) ein Abtriebsrad (80) umfasst, welches mit jeder Zahnstange (61) wirkverbunden ist und mit welchem jede Zahnstange (61) verschiebbar ist.

16. Das Greifer-Modul gemäss Anspruch 15, umfassend eine Abdeckung (52), durch welche zumindest die Greifer (60) hindurchragen und welche zumindest die Zahnstangen (61) abdeckt.

17. Eine Greifer-Vorrichtung umfassend mindestens ein Greifer-Modul gemäss einem der Ansprüche 13 bis 16, eine Struktur (100), eine Objektaufnahme (101) und mindestens eine Verschiebe-Einheit (102;103), wobei die Objektaufnahme (101) mit einer ersten Verschiebe-Einheit (102) an der Struktur (100) angeordnet ist und/oder wobei das Greifer-Modul mit einer zweiten Verschiebe-Einheit (103) an der Struktur (100) angeordnet ist.

18. Die Greifer-Vorrichtung gemäss Anspruch 17, wobei die erste Verschiebe-Einheit (102) und/oder die zweite Verschiebe-Einheit (103) Verschiebungen einer ersten horizontalen Richtung und/oder in einer dazu senkrechten zweiten horizontalen Richtung und/oder in einer vertikalen Richtung ausführen können.

## Claims

1. A transmission module for transmitting torques comprises
a base (1),
a first drive shaft (2) rotatable about a first axis (L1), a second drive shaft (7) parallel thereto rotatable about a second axis (L2),
a first output shaft (5) and a second output shaft (8), both of which are rotatable about a common third axis (L3), wherein the axes (L1;L2) of the drive shafts (2;7) are arranged parallel to the axis (L3) of the output shafts (5;8),
a gear unit (9),
wherein the two drive shafts (2;7), the gear unit (9) and the first output shaft (5) are rotatably supported in the base (1) and wherein the second output shaft (8) is rotatably supported in the first output shaft (5),
**characterized in that** the gear unit (9) is designed in such a way that a synchronous rotary movement of the two output shafts (5;8) can be effected by a rotary movement of the first drive shaft (2) and **in that** a relative rotary movement of the two output shafts (5;8) can be effected by a rotary movement of the second drive shaft (7).

2. The transmission module according to claim 1, wherein the gear unit (9) comprises a planetary gear with a sun gear (92), a planet carrier (97), at least one planet gear (93) and a second ring gear (94), wherein the first drive shaft (2) is operatively connected to and can drive the first output shaft (5), wherein the first drive shaft (2) is operatively connected to and can drive the second output shaft (8) by the gear unit (9) and wherein the second drive shaft (7) is operatively connected to and can drive the second output shaft (8) by the gear unit (9).

3. The transmission module according to claim 2, wherein the gear unit (9) comprises a central gear shaft (90) which is rotatable about the third axis (L3), wherein the sun gear (92) is firmly connected to a first end of the gear shaft (90), wherein the planet carrier (97) is rotatably mounted on the gear shaft (90) and wherein a second spur gear (91), adjacent to the planetary gear, is firmly connected to the gear shaft (90).

4. The transmission module according to claim 2 or 3, wherein a first spur gear (3) is firmly connected to the first drive shaft (2) and wherein the first spur gear (3) is operatively connected to the first output shaft (5) via the sun gear (92) of the planetary gear.

5. The transmission module according to one of claims 2 to 4, wherein a fifth spur gear (95) is firmly connected to the second drive shaft (7) and wherein the fifth spur gear (95) is operatively connected to the second output shaft (7) via the planet carrier (97) of the planetary gear.

6. The transmission module according to one of claims 2 to 5, wherein the gear unit (9) comprises a sixth spur gear (96), which is firmly connected to the planet carrier (97).

7. The transmission module according to one of claims 2 to 6, wherein the planet carrier (97) is rotatably mounted on the gear shaft (90) by the sixth spur gear (96).

8. The transmission module according to one of the preceding claims, the first output shaft (5) comprises a housing which completely surrounds the gear unit (9) and which comprises a first housing part (50) and a second housing part (51) firmly connected thereto.

9. The transmission module according to claim 8, comprising a first ring gear (4) which is rotatably mounted in the base (1) and which is firmly connected to the first housing part (50).

10. The transmission module according to claim 8 or 9, wherein the second ring gear (94) of the planetary gear is rotatably mounted in the first housing part (50) and is firmly connected to the second output shaft (8).

11. The transmission module according to one of claims 8 to 10, wherein the second housing part (51) comprises a central passage opening, which is in alignment with the third axis (L3) and through which the second output shaft (8) protrudes.

12. The transmission module according to one of claims 3 to 11, wherein the first ring gear (4) is rotatably mounted in the first base part (10) and wherein the first drive shaft (2), the second drive shaft (7) and the central gear shaft (90) are rotatably mounted in the second base part (11) .

13. A gripper module comprising a transmission module according to one of the preceding claims and a gripper unit (6), wherein the gripper unit (6) comprises at least two grippers (60) which are displaceably mounted in the first output shaft (5) in a first plane perpendicular to the third axis (L3) and which can be displaced by the second output shaft (8).

14. The gripper module according to claim 13, wherein the at least two grippers (60) are displaceably mounted in the second housing part (51).

15. The gripper module according to claim 13 or 14, wherein each gripper (60) is firmly connected to a rack (61) and the rack (61) is displaceably mounted in the first output shaft (5) in the first plane and wherein the second output shaft (8) comprises an output wheel (80) which is operatively connected to each rack (61) and with which each rack (61) is displaceable.

16. The gripper module according to claim 15, comprising a cover (52) through which at least the grippers (60) project and which covers at least the racks (61).

17. A gripper device comprising at least one gripper module according to one of claims 13 to 16, a structure (100), an object holder (101) and at least one displacement unit (102;103), wherein the object holder (101) is arranged on the structure (100) with a first displacement unit (102) and/or the gripper module is arranged on the structure (100) with a second displacement unit (103).

18. The gripper device according to claim 17, wherein the first displacement unit (102) and/or the second displacement unit (103) can perform displacements in a first horizontal direction and/or in a second horizontal direction perpendicular to the first horizontal direction and/or in a vertical direction.

## Revendications

1. Un module de transmission pour transmettre des couples comprend
une base (1),
un premier arbre d'entraînement (2) rotatif autour d'un premier axe (L1), un deuxième arbre d'entraînement (7) parallèle à celui-ci rotatif autour d'un deuxième axe (L2),
un premier arbre de sortie (5) et un deuxième arbre de sortie (8), tous deux rotatifs autour d'un troisième axe commun (L3), où les axes (L1;L2) des arbres d'entraînement (2;7) sont disposés parallèlement à l'axe (L3) des arbres de sortie (5;8),
une unité d'engrenage (9),
où les deux arbres d'entraînement (2;7), l'unité d'engrenage (9) et le premier arbre de sortie (5) sont supportés de manière rotative dans la base (1) et où le deuxième arbre de sortie (8) est supporté de manière rotative dans le premier arbre de sortie (5),
**caractérisé en ce que** l'unité d'engrenage (9) est conçu de telle sorte qu'un mouvement rotatif synchrone des deux arbres de sortie (5;8) peut être effectué par un mouvement rotatif du premier arbre d'entraînement (2) et **en ce qu'**un mouvement rotatif relatif des deux arbres de sortie (5;8) peut être effectué par un mouvement rotatif du deuxième arbre d'entraînement (7).

2. Module de transmission selon la revendication 1, où l'unité d'engrenage (9) comprend un engrenage planétaire avec une roue solaire (92), un porte-satellites (97), au moins un engrenage planétaire (93) et une deuxième couronne dentée (94), où le premier arbre d'entraînement (2) est relié de manière opérationnelle au premier arbre de sortie (5) et peut l'entrainer, où le premier arbre d'entraînement (2) est connecté de manière opérationnelle à et peut entraîner le deuxième arbre de sortie (8) par l'unité d'engrenage (9) et où le deuxième arbre d'entraînement (7) est connecté de manière opérationnelle à et peut entraîner le deuxième arbre de sortie (8) par l'unité d'engrenage (9) .

3. Module de transmission selon la revendication 2, où l'unité d'engrenage (9) comprend un arbre d'engrenage central (90) rotatif autour du troisième axe (L3), où la roue solaire (92) est fermement connectée à une première extrémité de l'arbre d'engrenage (90), où le porte-satellites (97) est monté de manière rotative sur l'arbre d'engrenage (90) et où un deuxième engrenage droit (91), adjacent au planétaire, est fermement connecté à l'arbre d'engrenage (90).

4. Module de transmission selon la revendication 2 ou 3, où un premier engrenage droit (3) est fermement connecté au premier arbre d'entraînement (2) et où le premier engrenage droit (3) est connecté de manière opérationnelle au premier arbre de sortie (5) par la roue solaire (92) de l'engrenage planétaire.

5. Module de transmission selon l'une des revendications 2 à 4, où un cinquième engrenage droit (95) est fermement connecté au deuxième arbre d'entraînement (7) et où le cinquième engrenage droit (95) est connecté de manière opérationnelle au deuxième arbre de sortie (7) par l'intermédiaire du porte-satellites (97) de l'engrenage planétaire.

6. Module de transmission selon l'une des revendications 2 à 5, où l'unité d'engrenage (9) comprend un sixième engrenage droit (96), qui est fermement connecté au porte-satellites (97).

7. Module de transmission selon l'une des revendications 2 à 6, où le porte-satellites (97) est monté de manière rotative sur l'arbre de transmission (90) par le sixième engrenage droit (96).

8. Module de transmission selon l'une des revendications précédentes, où le premier arbre de sortie (5) comprend un boîtier qui entoure complètement l'unité d'engrenage (9) et qui comprend une première partie de boîtier (50) et une deuxième partie de boîtier (51) fermement connectée à celle-ci.

9. Module de transmission selon la revendication 8, comprenant une première couronne dentée (4) qui est montée de manière rotative dans la base (1) et qui est fermement connectée à la première partie de boîtier (50).

10. Module de transmission selon la revendication 8 ou 9, où la deuxième couronne dentée (94) de l'engrenage planétaire est montée de manière rotative dans la première partie de boîtier (50) et est fermement connectée au deuxième arbre de sortie (8).

11. Module de transmission selon l'une des revendications 8 à 10, où la deuxième partie de boîtier (51) comprend une ouverture centrale de passage, alignée avec le troisième axe (L3) et à travers laquelle le deuxième arbre de sortie (8) fait saillie.

12. Module de transmission selon l'une des revendications 3 à 11, où la première couronne dentée (4) est montée de manière rotative dans la première partie de base (10) et où le premier arbre d'entraînement (2), le deuxième arbre d'entraînement (7) et l'arbre d'entraînement central (90) sont montés de manière rotative dans la deuxième partie de base (11).

13. Module de préhension comprenant un module de transmission selon l'une des revendications précédentes et une unité de préhension (6), où l'unité de préhension (6) comprend au moins deux pinces (60) qui sont montées de manière déplaçable dans le premier arbre de sortie (5) dans un premier plan perpendiculaire au troisième axe (L3) et qui peuvent être déplacées par le deuxième arbre de sortie (8) .

14. Module de préhension selon la revendication 13, où les au moins deux pinces (60) sont montées de manière déplaçable dans la deuxième partie de boîtier (51).

15. Module de préhension selon la revendication 13 ou 14, où chaque pince (60) est fermement connectée à une crémaillère (61) et la crémaillère (61) est montée de façon déplaçable dans le premier arbre de sortie (5) dans le premier plan et où le deuxième arbre de sortie (8) comprend une roue de sortie (80) qui est reliée de façon opérationnelle à chaque crémaillère (61) et avec laquelle chaque crémaillère (61) est déplaçable.

16. Module de préhension selon la revendication 15, comprenant un couvercle (52) à travers lequel au moins les pinces (60) font saillie et qui recouvre au moins les crémaillères (61).

17. Dispositif de préhension comprenant au moins un module de préhension selon l'une des revendications 13 à 16, une structure (100), un porte-objet (101) et au moins une unité de déplacement (102;103), où le porte-objet (101) est disposé sur la structure (100) avec une première unité de déplacement (102) et/ou le module de préhension est disposé sur la structure (100) avec une deuxième unité de déplacement (103).

18. Dispositif de préhension selon la revendication 17, où la première unité de déplacement (102) et/ou la deuxième unité de déplacement (103) peuvent effectuer des déplacements dans une première direction horizontale et/ou dans une deuxième direction horizontale perpendiculaire à la première direction horizontale et/ou dans une direction verticale.
